(19) Europäisches Patentamt
European Patent Office
Office européen des brevets

(11) Veröffentlichungsnummer : **0 043 481**
**B1**

# (12) EUROPÄISCHE PATENTSCHRIFT

(45) Veröffentlichungstag der Patentschrift : **28.11.84**

(51) Int. Cl.³ : **B 01 D 13/04**, C 08 G 65/34, C 08 G 59/32

(21) Anmeldenummer : **81104772.9**

(22) Anmeldetag : **22.06.81**

(54) **Semipermeable Membranen.**

(30) Priorität : **02.07.80 DE 3025079**
**13.12.80 DE 3047083**

(43) Veröffentlichungstag der Anmeldung : **13.01.82 Patentblatt 82/02**

(45) Bekanntmachung des Hinweises auf die Patenterteilung : **28.11.84 Patentblatt 84/48**

(84) Benannte Vertragsstaaten : **BE DE FR GB IT NL**

(56) Entgegenhaltungen :
**EP-A- 0 015 479**
**EP-A- 0 026 312**
**FR-A- 2 228 089**
**FR-A- 2 276 343**
**FR-A- 2 391 752**
**FR-A- 2 416 711**
**FR-A- 2 429 232**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Elfert, Klaus, Dr.**
**Doerperhofstrasse 31**
**D-4150 Krefeld (DE)**

**EP 0 043 481 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue semipermeable Membranen und ihre Verwendung bei Umkehrosmose und Ultrafiltration.

Umkehrosmose and Ultrafiltration sind Verfahren zur Stofftrennung. Die Stofftrennung erfolgt bei diesen Trennprozessen in der Weise, daß die zu trennende Lösung unter Druck über die Oberfläche einer semipermeablen Membran geleitet wird, wobei das Lösungsmittel und eventuell ein Teil der gelösten Stoffe durch die Membran dringen, während die übrigen Komponenten der Lösung an der Oberfläche der Membran zurückgehalten und in der Lösung angereichert werden.

Die Trennung gelöster Substanzen vom Lösungsmittel durch Druckfiltration, z. B. die Abtrennung von Salzen aus Meer- oder Brackwasser zur Gewinnung von Süßwasser oder die Abtrennung bestimmter Inhaltsstoffe aus Prozeßwässern und Produktionsabläufen oder die Entfernung unerwünschter Stoffe aus Abwässern, ist ein Verfahren, das zunehmend an Bedeutung gewinnt.

Eine technische Bedeutung haben bisher hauptsächlich Membranen aus Celluloseestern insbesondere Celluloseacetat, bzw. aus Polyamiden und Polysulfonen erlangt. Celluloseacetatmembranen finden wegen ihrer guten Durchflußleistung und ihres hohen Trennvermögens technische Anwendung, obwohl sie eine Reihe nachteiliger Eigenschaften ausweisen, die ihre allgemeine Verwendbarkeit einschränken. Es sind dies einmal mangelnde Chemikalienbeständigkeit, insbesondere auch die Hydrolyseempfindlichkeit, bei hohem oder niedrigem pH-Wert sowie die Anfälligkeit gegenüber einem Abbau durch Mikroorganismen. Dies führt im Laufe der Zeit zu einer Verschlechterung der Membraneigenschaften.

Ferner sind die Celluloseacetatmembranen durch eine niedrige Wärmebeständigkeit in ihrer Verwendung eingeschränkt. Polyamidmembranen besitzen eine höhere Beständigkeit gegenüber Alkalien oder Säuren sowie Lösungsmitteln, weisen aber auch eine geringere Durchflußleistung als Celluloseacetatmembranen auf und sind ebenfalls nur bei niedrigeren Temperaturen einsetzbar. Membranen aus Polysulfonen haben eine größere Beständigkeit gegenüber Wärme und Chemikalien als solche aus Celluloseacetat bzw. Polyamiden, jedoch lassen sich aus Polysulfonen nur durchlässige Membranen herstellen, die nicht zur Abtrennung von Stoffen mit kleiner Teilchengröße bzw. mit niedrigem Molekulargewicht wie beispielsweise Salzen geeignet sind.

Die vorstehend angeführten Membranen sind ihrer Struktur nach integral-asymmetrische Membranen, die durch eine sehr dünne, aber selektive Oberflächenschicht — der trennwirksamen Schicht — verbunden mit einer mikroporösen Unterschicht (Stützschicht) aus dem gleichen Kunststoff gekennzeichnet sind.

Einen anderen Aufbau weist die sogenannte Composite-Membran, auch als zusammengesetzte — oder Verbundmembran bezeichnet, auf, bei der auf einer stabilen, zumeist aus einer mikroporösen Membran gebildeten Unterlage, eine sehr dünne Polymerschicht aus einem anderen Material als selektive Membranschicht aufgebracht ist.

Zusammengesetzte Membranen werden z. B. erhalten, indem eine mikroporöse Stützmembran nacheinander mit Lösungen der Reaktionskomponenten, die die Membranen bilden, in Kontakt gebracht wird.

Solche Membranen sind beispielsweise in der US-PS 4 039 440 oder in Reverse Osmosis and Synthetic Membranes, Theory, Technology, Engineering ; Sourirajan, S. 1977, S. 249 ff. beschrieben und werden in der Weise hergestellt, daß auf einen mikroporösen Träger eine Polyethyleniminschicht aufgetragen und mit einer Lösung einer polyfunktionellen Verbindung zur Reaktion gebracht und unter Bildung eines dünnen Films auf der Oberfläche des porösen Substrats vernetzt wird. Die so erhaltenen Membranen weisen den Nachteil einer geringen Beständigkeit gegenüber Oxydationsmitteln (insbesondere Chlor) in der zugeführten Lösung auf. Ein weiterer Nachteil dieses Herstellungsverfahren sind die zahlreichen Verfahrensstufen.

Weitere Möglichkeiten der reaktiven Membranherstellung durch Kondensations- und Polymerisationsreaktionen sind in der US-PS 3 926 798 und der DOS 2 904 979 beschrieben, wobei die Membranen aus löslichen Vorstufen direkt auf einem Träger hergestellt werden.

Nach DOS 2 904 979 hat man versucht, semipermeable Membranen aus Polymeren mit Triisocyanuratstruktur herzustellen ; jedoch erfordert das Verfahren, daß die entsprechenden monomeren Verbindungen mit Triisocyanuratstruktur bzw. lösliche Vorstufen derselben bei hohen Temperaturen in das Polymere überführt werden. Aufgrund von Untersuchungen (J. Chem. Soc. 1961, 3148 und US-PS 2 580 468) ist bekannt, daß Verbindungen mit Triisocyanuratstruktur, wie sie in der DOS 2 904 979 verwendet werden, bei hohen Temperaturen einem Zerfall oder einer Rückspaltung unterliegen können.

Es stehen daher noch keine Membranen mit einer hohen Wasserpermeabilität sowie einer guten Selektivität für Stoffe mit niedrigen Molekulargewichten und ohne die vorstehend beschriebenen Nachteile der bekannten Membranen zur Verfügung.

Es besteht daher ein Bedarf für die Entwicklung von Membranen, die neben einen hohen Permeabilität und Selektivität eine hobe Beständigkeit gegenüber chemischen, insbesondere oxydativen, und biologischen Abbau und vor allem eine hohe Wärmebeständigkeit aufweisen. Der vorliegenden Erfindung liegt die Aufgabe zugrunde, eine semipermeable Membran zur Verfügung zu stellen, die für die umgekehrte Osmose und Ultrafiltration verwendet werden kann und die Nachteile der vorstehen beschriebenen Membranen vermeidet.

Es wurde überraschenderweise gefunden, daß semipermeable Verbund-Membranen, die eine selektive Membranschicht auf der Basis von 1,2,4-Triazolidin-3,5-dion-Strukturen enthaltenden Polymerisaten aufweisen, die die gewünschten Eigenschaften besitzen.

Gegenstand der Erfindung sind daher semipermeable Verbundmembranen, die aus wenigstens einer mikroporösen Stützmembran und wenigstens einer selektiven Membranschicht bestehen und daduch gekennzeichnet sind, daß die selektive Membranschicht aus Polymerisaten mit 1,2,4-Triazolidin-3,5-dion-Struktur aufgebaut ist.

Die Polymerisate mit 1,2,4-Triazolidin-3,5-dion-Struktur werden durch Polykondensation mindestens einer Verbindung der allgemeinen Formel I und/oder wasserlöslicher Reaktionsprodukte derselben erhalten

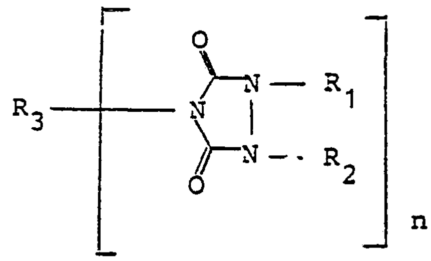

(I)

worin $R_1$ und $R_2$ gleich oder verschieden, Wasserstoff oder einen $C_1$-$C_4$-Alkylrest und $R_3$ Wasserstoff, einen n-wertigen $C_1$-$C_{10}$-Alkylrest bedeuten und wenigstens zwei der Reste $R_1$, $R_2$ und $R_3$ für einen Rest der allgemeinen Formel

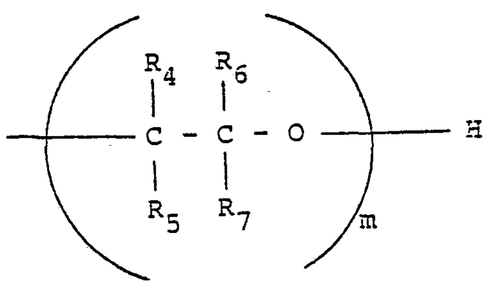

mit $R_4$, $R_5$, $R_6$, $R_7$ gleich oder verschieden, unabhängig voneinander, für Wasserstoff oder einen $C_1$-$C_4$-Alkylrest, bevorzugt für Wasserstoff oder Methyl, m für eine ganze Zahl von 1-10, bevorzugt 1-3, und n für 1 oder 2 oder $R_1$, $R_2$ und $R_3$ für einen Glycidyl-rest stehen, und noch weiteren hydroxylgruppenhaltigen Comonomeren.

Beispiele für Verbindungen der allgemeinen Formel (I) sind folgende Verbindungen :

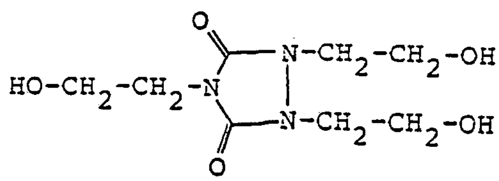

(II)

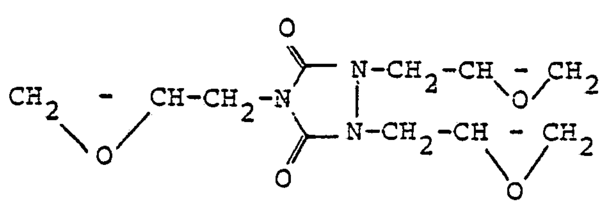

(III)

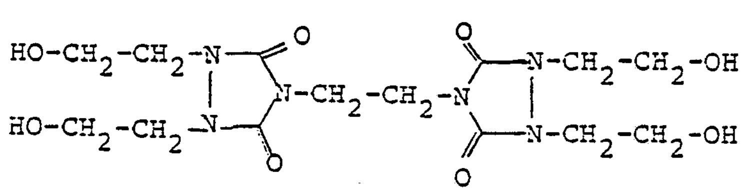

(IV)

Im Rahmen der Erfindung besonders bevorzugt ist Trishydroxyethyl, 1,2,4-Triazolidin-3,5-dion (II), im folgenden auch als THEU bezeichnet.

Beispiele wasserlöslicher Reaktionsprodukte von Verbindungen der Formel (I) sind Kondensationsprodukte, die durch Erhitzen einer Verbindung gemäß Formel (I) in Gegenwart eines sauren Katalysators erhalten werden. Die so erhaltenen wasserlöslichen Reaktionsprodukte können ebenfalls zur Membranherstellung verwendet werden.

Erfindungsgemäß werden auch hydroxylgruppenhaltige Comonomere neben den Verbindungen gemäß Formel I bzw. deren wasserlöslichen Reaktionsprodukten zur Herstellung der Polykondensate, die die semipermeablen zusammengesetzten Membran aufbauen, verwendet.

Beispiele für derartige Verbindungen sind Alkohole wie Furfurylalkohol, Tetrahydrofurfurylalkohol, Benzylalkohol oder Aldehyde wie Formaldehyd, Furfurylaldehyd, Benzaldehyd.

Darüber hinaus sind auch weitere Comonomere wie Polyole wie z. B. Ethylenglykol, Diethylenglykol, Polyethylenglykol, Butandiol, Glycerin, Trimethylolpropan, Pentaerythrit, Sorbit, Mannit, Dianhydrosorbit, ferner Hydroxycarbonsäuren wie Zitronensäure, Weinsäure, Glykolsäure und/oder Alkoxymethylmelamine wie z. B. Hexamethoxymethylmelamin geeignet.

Es können auch zwei oder mehrere der vorstehend aufgeführten Verbindungen als Comonomere eingesetzt werden.

Überraschenderweise wurde gefunden, daß bei Verwendung von Copolymerisaten aus einer Verbindung gemäß Formel I bzw. einem wasserlöslichen Reaktionsprodukt und einem oder mehreren der oben erwähnten Verbindungen Membranen mit guter Rückhaltung für gelöste Stoffe und guter Wassermeabilität erhalten werden. Im Rahmen der Erfindung ist es daher bevorzugt, die Verbindung gemäß Formel I bzw. ihrer wasserlöslichen Reaktionsprodukte mit mindestens einem Comonomeren aus der Reihe der oben erwähnten Verbindungen umzusetzen. Besonders bevorzugt sind aber Furfurylalkohol, Formaldehyd und Ethylenglykol.

Das Verhältnis zwischen der Verbindung mit Urazolstruktur und den copolymerisierbaren Verbindungen kann in Abhängigkeit von den gewünschten Membraneigenschaften variieren. Der Anteil der Verbindungen gemäß Formel (I) bzw. ihrer wasserlöslichen Reaktionsprodukte beträgt wenigstens etwa 20 Gew.-%, vorzugsweise 20-80 Gew.-%, bezogen auf die Gesamtmenge der eingesetzten Ausgangsverbindungen.

Die semipermeable Verbund-Membran gemäß der Erfindung besteht aus einem 1,2,4-Triazolidin-3,5-dion-Strukturen enthaltenden Polymeren auf einem geeigneten Träger.

Erfindungsgemäß wird ein dünner selektiver Film bestehend aus einem 1,2,4-Triazolidin-3,5-dion-Strukturen enthaltenden Polymeren, auf einem mikroporösen Trägermaterial gebildet, indem der Träger zunächst mit einer Lösung, die mindestens eine Verbindung der Formel I bzw. ein wasserlösliches Reaktionsprodukt derselben sowie gegebenenfalls ein oder mehrere Comonomere aus der Gruppe der vorstehend erwähnten Verbindungen enthält, behandelt und der beschichtete Träger in Gegenwart eines sauren Katalysators einer Wärmebehandlung unterworfen wird, wobei die Reaktionskomponenten polymerisieren.

Erfindungsgemäß bevorzugt werden die zusammengesetzten Membranen in der Weise erhalten, daß eine Beschichtungslösung hergestellt und als Überzug auf einem geeigneten Trägermaterial aufgebracht wird und die beschichteten Träger bei einer Temperatur von etwa 90-190 °C vorzugsweise von 110° bis 170 °C während einer Zeit von etwa 1-30 min erhitzt werden, wobei die Beschichtung vernetzt.

Die Beschichtungslösung wird aus den Reaktionskomponenten und einem Lösungsmittel bei Raumtemperatur hergestellt, wobei als Lösungsmittel Wasser oder Gemische von Wasser und Alkoholen wie Methanol, Ethanol oder Isopropanol verwendet werden.

Die Konzentration der Verbindung der Formel (I) bzw. ihrer wasserlöslichen Reaktionsprodukte in der Lösung kann entsprechend den Eigenschaften der gewünschten Membran variieren. Im allgemeinen liegt die Konzentration dieser Verbindungen zwischen 0,1 und 10 Gew.-%, vorzugsweise bei 0,5-8 Gew.-%.

Zu den Katalysatoren, die für die Herstellung der Polymeren erforderlich sind, gehören Säuren und Säure bildende Stoffe. Beispiele für solche Katalysatoren sind Mineralsäuren wie Schwefelsäure, Phosphorsäure, Salzsäure sowie organische Säuren wie Benzolsulfonsäure, Toluolsulfonsäure.

Das Verhältnis von Säurekatalysator zu den reaktiven Komponenten beträgt im allgemeinen 1 : 20 bis 1 : 1.

Als vorteilhaft erweist sich ferner die Zugabe von oberflächenaktiven Mitteln zur Beschichtungslösung, um die Benetzung des Trägers zu verbessern und um einen gleichmäßigen Überzug zu erreichen. Geeignete oberflächenaktive Mittel sind beispielsweise anionische Tenside wie Alkansulfonate, Alkylarylsulfonate, Fettalkoholsulfate oder nichtionogene Tenside wie Alkylphenolpolyglykoläther oder Fettalkoholpolyäther.

Die so hergestellte Lösung wird zur Beschichtung eines mikroporösen Trägers zur Bildung einer semipermeablen Verbund-Membran verwendet.

Die mikroporösen Träger sind an sich bekannt. Für die erfindungsgemäße Membrane kann irgendein geeignetes Trägermaterial verwendet werden. Bevorzugte mikroporöse Träger sind solche aus Polysulfonen, sulfoniertem Polysulfon, Polyvinylchlorid oder Polyphenylenoxid. Als ein besonders brauchbares Trägermaterial für die erfindungsgemäßen Membranen hat sich ein Polysulfon erwiesen. Die Herstellung des mikroporösen Trägers aus Polysulfon ist z. B. in Office of Saline Water Research and Development

Progress Report Nr. 359, Okt. 1968 beschrieben. Ferner kann der verwendete Träger an seiner Rückseite noch durch ein Vlies, Papier oder gewebten Stoff verstärkt sein. Solche Verstärkungsmaterialien können aus Polyethylen, Polypropylen, Polyester oder Polyamid gefertigt sein.

Die Beschichtung des Trägers kann nach bekannten Verfahren wie Streichen, Bürsten, Aufgießen und Sprühen erfolgen oder in einfacher Weise durch Eintauchen des Trägers in die Beschichtungslösung vorgenommen werden.

Das beschichtete Trägermaterial wird mittels eines Heißluftstromes oder in einem Trockenschrank einer Wärmebehandlung unterworden. Während der Wärmebehandlung polymerisieren die Monomeren der Beschichtungslösung und vernetzen auf dem Träger. Sowohl die Dauer der Wärmebehandlung als auch die Temperatur können in Abhängigkeit von der Zusammensetzung der Beschichtungslösung sowie den gewünschten Membraneigenschaften variieren. Die Dauer der Wärmebehandlung liegt im allgemeinen zwischen 1 und 30 min, während die Temperatur zwischen 90 und 190 °C liegt.

Die erfindungsgemäßen Membranen eignen sich zur Abtrennung und Konzentrierung von Substanzen durch Umkehrosmose und Ultrafiltration.

Die Membranen können zur Entsalzung von Meer- oder Brackwasser oder zur Behandlung von industriellen Prozeßwassern und Produktionsabläufen zur Abtrennung organischer Materialien eingesetzt werden.

Die erfindungsgemäßen semipermeablen Membranen sind für die beschriebenen Anwendungen besonders geeignet, da sie ein sehr gutes Rückhaltevermögen für Salze und kleine organische Moleküle aufweisen, eine hobe Wasserpermeabilität sowie eine hohe Beständigkeit gegenüber heißen Lösungen und insbesondere Hydrolysebeständigkeit und Oxydationsbeständigkeit besitzen.

Zur Bestimmung der Membraneigenschaften wird die fertige Membran auf eine poröse Sinterplatte aus Metall aufgebracht und in eine Druckfiltrationsapparatur eingesetzt, in der die Testlöstungen bei Raumtemperatur unter den angegebenen Drücken an der Membranoberfläche vorbeigepumpt werden. Die Pumpleistung beträgt ca. 15 l/h.

Die Filtrationsleistung der Membran wird in Liter/m$^2$ Tag angegeben. Die prozentuale Zurückhaltung wird üblicherweise wie folgt angegeben :

$$\text{Zurückhaltung} = \left(1 - \frac{\text{Konz. des Filtrats an gelöstem Stoff}}{\text{Kong. der Ausgangslösung an gelöstem Stoff}}\right) \cdot 100\ (\%)$$

Herstellung des mikroporösen Trägers

Es wurde eine Gießlösung mit 15 Gew.-% eines Polysulfons (Üdel P 3500® Union Carbide) in Dimethylformamid hergestellt. Die Lösung wurde in einer Schichtdicke von 0,25 mm bei Raumtemperatur auf ein Polyestervlies (Flächengewicht : 180 g/m$^2$) augetragen. Anschließend wurde die Polysulfonschicht in Wasser von Raumtemperatur, das 0,5 Gew.-% Natriumdodecylsulfat enthält, koaguliert. Man erhielt eine vliesverstärkte, microporöse Polysulfonmembran, welche als Träger für die Verbund-Membranen in den folgenden Beispielen verwendet wurde.

Beispiel 1

23,3 g Trishydroxyethyl-1,2,4-Triazolidin-3,5-dion und 3 g Wasser wurden unter Rühren 10 min auf 130 °C erhitzt. Die Temperatur wurde auf 140° Erhöht und 0,5 Schwefelsäure zugesetzt und weitere 10 min bei dieser Temperatur gerührt. Nach dem Erkalten erhielt man ein wasserlösliches, viskoses Harz von leicht bräunlicher Farbe.

Eine feuchte Trägermembran wurde 10 min bei Raumtemperatur in eine wäßrige Lösung eingetaucht, die 3 Gew.-% dieses Kondensationsharzes, 0,5 Gew.-% Na-dodecylsulfat und 0,1 Gew.-% Schwefelsäure enthielt. Sodann wurde die beschichtete Folie herausgenommen und 1 min vertikal gehalten, um überschüssige Lösung ablaufen zu lassen. Anschließend wurde die Folie 20 min bei 150 °C im Trockenschrank aufgehängt. Die fertige Membran wurde mit einer 3,5 %igen NaCl-Lösung unter einem Druck von 90 bar getestet. Die Leistung dieser Membran lag bei einem Durchfluß von 245 l/m$^2$ d und einer Salzrückhaltung von 84 %.

Beispiel 2

Es wurde eine wäßrige Lösung, die 1 Gew.-% Trishydroxyethyl-1,2,4-Triazolidin-3,5-dion, 2 Gew.-% Furfuryl-alkohol, 4 Gew.-% Schwefelsäure, 1 Gew.-% Na-dodecylsulfat sowie 20 Gew.-% Isopropanol enthielt, hergestellt und vor Gebrauch filtriert. Eine feuchte Trägermembran, die wie vorher beschrieben hergestellt war, wurde bei Raumtemperatur während 10 min in diese Beschichtungslösung eingetaucht. Die Membran wurde entnommen und für 1 min senkrecht gehalten, damit überschüssige Lösung ablaufen konnte. Die beschichtete Trägermembran wurd in einem Trockenschrank bei 140 °C während einer Dauer von 30 min behandelt.

Die erhaltene zusammengesetzte Membran wurde mit einer 3,5 %ige Lösung von NaCl bei einem Druck von 90 bar getestet. Der Durchfluß betrug 490 $l/m^2$ und die Salzrückhaltung 99,2 %.

Beispiel 3

Die Membranherstellung war die gleiche wie in Beispiel 2 mit dem Unterschiede, daß kein Isopropanol verwendet wurde. Diese Membran ergab bei der Prüfung folgende Werte :

| | |
|---|---|
| Beschickungslösung : | 3,5 % NaCl |
| Druck : | 90 bar |
| Durchfluß : | 500 $l/m^2$ d |
| Rückhaltung : | 99,4 % |

Beispiele 4-17

Die Ergebnisse von Membranen, die unter Verwendung verschiedener Comonomeren nach der gleichen Herstellungsmethode wie in Beispiel 2 erhalten wurden, sind in der folgenden Tabelle zusammengestellt.

(Siehe Tabelle Seite 7 f.)

Tabelle

| Beispiel | Zusammensetzung der Beschichtungslösung | | | | Trocknungsbedingungen [°C/Min] | Durchfluß [l/m²d] | Zurückhaltung [%] |
|---|---|---|---|---|---|---|---|
| | THEU Gew.-% | Comonomer Gew.-% | $H_2SO_4$ % | Isopropanol % | | | |
| 4 | 4 | FA/Ethylenglykol - 2/2 | 4 | 20 | 150/30 | 580 | 98.8 |
| 5 | 1 | FA/PEG - 2/1 | 2 | - | 150/15 | 210 | 98.6 |
| 6 | 1 | FA/DEG - 2/1 | 2 | 20 | " | 620 | 98.7 |
| 7 | 1 | FA/Trimethylolpropan - 2/1 | 2 | 20 | " | 250 | 97.8 |
| 8 | 1 | FA/Pentaerythrit - 2/1 | 2 | 20 | " | 265 | 98.1 |
| 9 | 1 | FA/Mannit - 2/1 | 2 | 20 | " | 550 | 98.9 |
| 10 | 4 | FA/Dianhydrosorbit - 2/2 | 4 | 20 | " | 580 | 98.7 |
| 11 | 1 | FA/Benzylalkohol - 2/1 | 2 | 20 | 150/20 | 150 | 98.2 |
| 12 | 1 | FA/Zitronensäure - 2/1 | 2 | - | 150/15 | 270 | 97.2 |
| 13 | 1 | FA/Furfurylaldehyd - 2/1 | 2 | 20 | " | 390 | 99.2 |
| 14 | 1 | FA/Benzaldehyd - 2/1 | 2 | 20 | " | 300 | 98.4 |
| 15 | 1 | FA/TGUZ - 2/1 | 2 | 20 | " | 490 | 98.7 |
| 16 | 1 | FA/Hexamethoxymethylolmelamin - 2/1 | 2 | 20 | " | 320 | 99.1 |
| 17 | 1 | FA/Butandiol-1,4 - 2/1 | 2 | 20 | " | 280 | 96.5 |

F

FA = Furfurylalkohol, PEG = Polyethylenglykol MG 4 000, DEG = Diethylenglykol, TGUZ = Trisglycidylurazol

Testbedingungen, 3,5 % NaCl und 90 bar

Beispiel 18

23,3 g THEU und 12,2 g einer Formalin-Lösung (35 %ig) wurden auf 100 °C erhitzt und 30 min bei dieser Temperatur gerührt. Man ließ abkühlen und engte die wäßrige Lösung bei 60 °C im Vakuum ein. Es bleiben 25,9 g eines leicht gelblichen, wasserlöslichen Kondensationsproduktes zurück. Unter Verwendung dieses Harzes wurde eine wäßrige Beschichtungslösung, die 4 Gew.-% des Harzes, 0,7 Gew.-% Na-dodecylsulfat und 0,2 Gew.-% Schwefelsäure enthielt, hergestellt. Prüfung bei 90 bar und 3,5 % NaCl.

| | |
|---|---|
| Durchfluß : | 140 l/m$^2$ d |
| Rückhaltung : | 95 % |

Beispiel 19

Eine wäßrige Beschichtungslösung mit einem Gehalt von 1 Gew.-% einer Verbindung der Formel

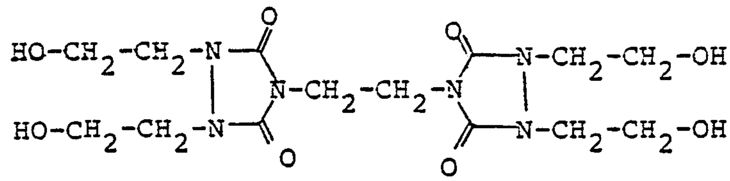

2 Gew.-% Furfurylalkohol, 2 Gew.-% Schwefelsäure und 20 Gew.-% Isopropanol wurde zur Beschichtung der Trägermembran verwendet. Die Wärmebehandlung erfolgte 30 min bei 150 °C.

| | |
|---|---|
| Beschickungslösung : | 3,5 % NaCl |
| Druck : | 90 bar |
| Druchfluß : | 420 l/m$^2$ d |
| Rückhaltung : | 97,7 %. |

Beispiel 20

Eine Membran, hergestellt nach Beispiel 4, wurde mit einer 0,7 %igen wäßrigen Lösung von Caprolactam unter einem Druck von 40 bar beaufschlagt. Die Membran wies unter den angegebenen Bedingungen eine Gelöststoffrückhaltung von über 99 % und einen Durchfluß von 420 l/m$^2$ d auf. Die Bestimmung der Konzentration des gelösten Stoffes erfolgte über eine Analyse des Gesamtkohlenstoffgehaltes.

Beispiel 21

Eine Membran nach Beispiel 2 mit einem Durchfluß von 490 l/m$^2$ d und einer Salzrückhaltung von 99,2 % wurde mit einer wäßrigen Beschickungslösung von 3,5 % NaCl plus 150 ppm Chlor beaufschlagt. Die Leistung wurde auch noch nach 90 Stunden gefunden.

Beispiel 22

Einen Membran nach Beispiel 2 mit einem Durchfluß von 490 l/m$^2$ d und 99,2 % Rückhaltung (3,5 % NaCl, 90 bar) wurde 90 Stunden mit Wasser von 80 °C behandelt, wobei nach dem Versuch kein Rückgang des Druchflusses festgestellt werden konnte und die Salzrückhaltung über 95 % lag.

Vergleichsbeispiel

Eine wäßrige Beschichtungslösung wurde aus 2 Gew.-% Furfurylalkohol, 2 Gew.-% Schwefelsäure sowie 20 Gew.-% Isopropanol unter Zusatz von 1 Gew.-% Natriumdodecylsulfat hergestellt. Die Herstellungmethode war die gleich wie in den vorhergehenden Beispielen, die Trocknungsbedingungen waren 20 min bei 140 °C. Die fertige Membran wurde in der angegebenen Testapparatur mit einer 3,5 %igen NaCl-Lösung und einem Druck von 90 bar getestet. Diese Membran zeigte folgende Eigenschaften :

| | |
|---|---|
| Durchfluß : | 320 l/m$^2$ d |
| Rückhaltung : | 90,5 %. |

## Ansprüche

1. Semipermeable Verbundmembran bestehend aus wenigstens einer mikroporösen Trägermembran und wenigstens einer semipermeablen Schicht, dadurch gekennzeichnet, daß die semipermeable Schicht aus einem Polymermaterial besteht, das durch Polykondensation mindestens einer Verbindung der allgemeinen Formel (I)

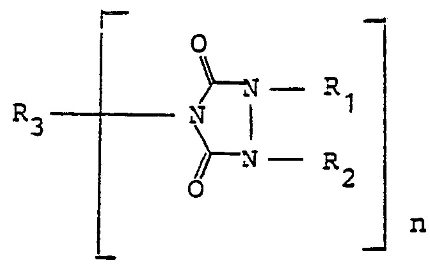

(I)

worin $R_1$ und $R_2$, gleich oder verschieden, Wasserstoff oder einen $C_1$-$C_4$-Alkylrest und $R_3$ Wasserstoff, einen n-wertigen $C_1$-$C_{10}$-Alkylrest bedeuten, und wenigstens zwei der Reste $R_1$, $R_2$ und $R_3$ für einen Rest der allgemeinen Formel

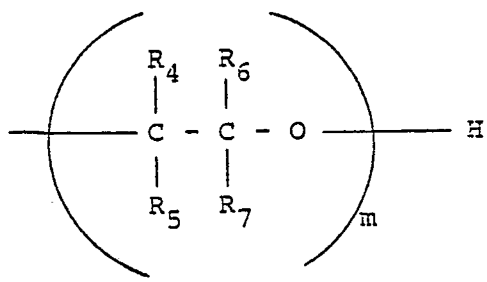

mit $R_4$, $R_5$, $R_6$, $R_7$, gleich oder verschieden, unabhängig voneinander, für Wasserstoff oder einen $C_1$-$C_4$-Alkylrest, m für eine ganze Zahl von 1-10, und n für 1 oder 2, oder $R_1$, $R_2$ und $R_3$ für einen Glycidylrest stehen, und/oder wenigstens eines wasserlöslichen Reaktionsproduktes der Verbindung der Formel I und noch weiteren hydroxylgruppenhaltigen Co-monomeren erhalten wird.

2. Semipermeable Membran anch Anspruch 1, dadurch gekennzeichnet, daß die Verbindung der allgemeinen Formel (I) Trishydroxyethylurazol und/oder Trisglycidylurazol ist.

3. Semipermeable Membran nach Ansprüchen 1 und 2, dadurch gekennzeichnet, daß als hydroxylgruppenhaltiges Comonomeres Furfurylalkohol, Tetrahydrofurylalkohol, Benzylalkohol, ein Polyol mit $C_2$-$C_8$, ein Polyethylenoxid, eine Hydroxycarbonsäuren mit $C_2$-$C_{17}$, ein aliphatisches oder aromatisches Aldehyd oder ein Alkoxymethylmelamin verwendet wird.

4. Semipermeable Membran nach Ansprüchen 1-3, dadurch gekennzeichnet, daß als Comonomere Furfurylalkohol, Tetrahydrofurfurylalkohol, Benzylalkohol, Formaldehyd, Furfurylaldehyd, Benzaldehyd, Ethylenglykol, Diethylenglykol, Polyethylenglykol, Butandiol, Glycerin, Trimethylolpropan, Pentaerythrit, Sorbit, Mannit, Dianhydrosorbit, Zitronensäure, Weinsäure, Glykolsäure oder Hexamethoxymethylmelamin verwendet werden.

5. Semipermeable Membran nach Ansprüchen 1-4, dadurch gekennzeichnet, daß als Comonomere Furfurylalkohol, Formaldehyd oder Ethylenglykol verwendet werden.

6. Semipermeable Membran nach Ansprüchen 1-5, dadurch gekennzeichnet, daß der Anteil der Verbindungen gemäß Formel I und/oder ihrer wasserlöslichen Verbindungen im Polykondensat wenigstens 20 Gew.-% beträgt.

7. Semipermeable Membran nach Ansprüchen 1-6, dadurch gekennzeichnet, daß der Anteil der Verbindungen nach Formel I und/oder ihrer wasserlöslichen Verbindungen in der zu kondensierenden Ausgangsmichung 20-80 Gew.-% beträgt.

8. Verwendung der semipermeablen Verbundmembranen nach Ansprüchen 1-7 zur Umkehrosmose und Ultrafiltration.

9. Verwendung nach Anspruch 8 zur Meerwasserentsalzung.

## Claims

1. Semipermeable compound membrane consisting of at least one microporous substrate membrane and at least one semipermeable layer, characterised in that the semipermeable layer consists of a polymer material which is obtained by polycondensation of at least one compound of the general formula (I)

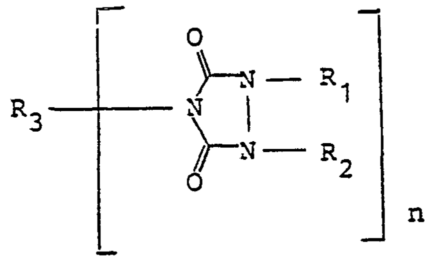

(I)

wherein $R_1$ and $R_2$, which are identical or different, denote hydrogen or a $C_1$-$C_4$-alkyl radical and $R_3$ denotes hydrogen or an n-valent $C_1$-$C_{10}$-alkyl radical, and at least two of the radicals $R_1$, $R_2$ and $R_3$ represent a radical of the general formula

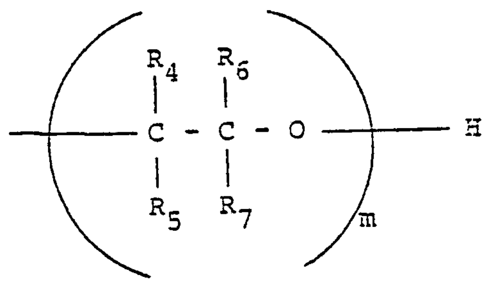

in which $R_4$, $R_5$, $R_6$ and $R_7$, which are identical or different, independently of one another represent hydrogen or a $C_1$-$C_4$-alkyl radical, m represents an integer of 1-10 and n represents 1 or 2, or $R_1$, $R_2$ and $R_3$ represent a glycidyl radical, and/or at least one water-soluble reaction product of the compound of the formula I and also additional comonomers containing hydroxyl groups.

2. Semipermeable membrane according to Claim 1, characterised in that the compound of the general formula (I) is trishydroxyethyl-urazole and/or trisglycidylurazole.

3. Semipermeable membrane according to Claim 1 and 2, characterised in that furfuryl alcohol, tetrahydrofuryl alcohol, benzyl alcohol, a polyol with $C_2$-$C_8$, a polyethylene oxide, a hydroxycarboxylic acid with $C_2$-$C_{17}$, an aliphatic or aromatic aldehyde or an alkoxymethyl melamine is used as the comonomer containing hydroxyl groups.

4. Semipermeable membrane according to Claims 1-3, characterised in that furfuryl alcohol, tetrahydrofurfuryl alcohol, benzyl alcohol, formaldehyde, furfuryl aldehyde, benzaldehyde, ethylene glycol, diethylene glycol, polyethylene glycol, butane diol, glycerol, trimethylol propane, pentaerythritol, sorbitol, mannitol, dianhydrosorbitol, citric acid, tartaric acid, glycolic acid or hexamethoxymethyl melamine are used as the comonomers.

5. Semipermeable membrane according to Claims 1-4, characterised in that furfuryl alcohol, formaldehyde or ethylene glycol are used as the comonomers.

6. Semipermeable membrane according to Claims 1-5, characterised in that the proportion of the compounds according to formula I and/or water-soluble compounds thereof in the polycondensate is at least 20 % by weight.

7. Semipermeable membrane according to Claims 1-6, characterised in that the proportion of compounds according to formula I and/or water-soluble compounds thereof in the starting mixture to be condensed is 20-80 % by weight.

8. Use of the semipermeable compound membranes according to Claims 1-7 for reverse osmosis and ultrafiltration.

9. Use according to Claim 8 for the desalination of sea water.

**Revendications**

1. Membrane composite semi-perméable constituée par au moins une membrane de support microporeuse et au moins une couche semi-perméable, caractérisée en ce que la couche semi-perméable est formée d'une matière polymérique qui est obtenue par polycondensation d'au moins un composé de formule générale (I)

(Voir formule page suivante)

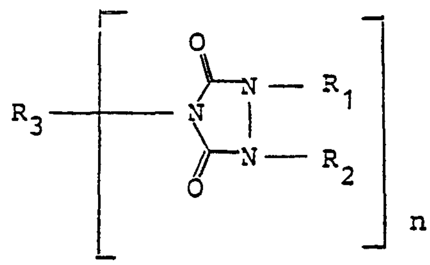

(I)

dans laquelle $R_1$ et $R_2$, égaux ou différents, représentent l'hydrogène ou un reste alkyle en $C_1$ à $C_4$ et $R_3$ représente l'hydrogène, un reste alkyle en $C_1$ à $C_{10}$ de valence n, et au moins deux des restes $R_1$, $R_2$ et $R_3$ représentent un reste de formule générale

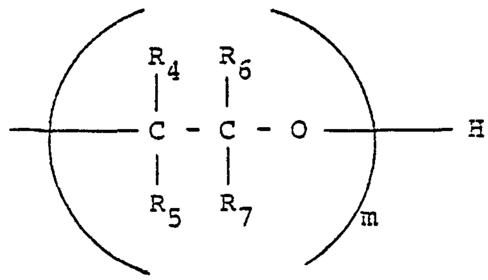

dans laquelle $R_4$, $R_5$, $R_6$, $R_7$, égaux ou différents, représentent, indépendamment l'un de l'autre, l'hydrogène ou un reste alkyle en $C_1$ à $C_4$, m est un nombre entier de 1 à 10 et n est égal à 1 ou 2, ou bien $R_1$, $R_2$ et $R_3$ représentent un reste glycidyle, et/ou d'au moins un produit hydrosoluble de réaction du composé de formule I et d'encore d'autres comonomères porteurs de groupes hydroxyle.

2. Membrane semi-perméable suivant la revendication 1, caractérisée en ce que le composé de formule générale (I) est le trishydroxyéthylurazole et/ou le trisglycidylurazole.

3. Membrane semi-perméable suivant les revendications 1 et 2, caractérisée en ce que l'on utilise comme comonomère porteur de groupes hydroxyle l'alcool furfurylique, l'alcool tétrahydrofurylique, l'alcool benzylique, un polyol en $C_2$ à $C_8$, un polyéthylèneoxyde, un acide hydroxycarboxylique en $C_2$ à $C_{17}$, un aldéhyde aliphatique ou aromatique ou une alkoxyméthylmélamine.

4. Membrane semi-perméable suivant les revendications 1 à 3, caractérisée en ce qu'on utilise comme comonomères l'alcool furfurylique, l'alcool tétrahydrofurfurylique, l'alcool benzylique, le formaldéhyde, le furfurylaldéhyde, le benzaldéhyde, l'éthylène-glycol, le diéthylèneglycol, un polyéthylèneglycol, le butanediol, le glycérol, le triméthylolpropane, le pentaérythritol, le sorbitol, le mannitol, le dianhydrosorbitol, l'acide citrique, l'acide tartrique, l'acide glycolique ou l'hexaméthoxyméthylmélamine.

5. Membrane semi-perméable suivant les revendications 1-4, caractérisée en ce qu'on utilise comme comonomères l'alcool furfurylique, le formaldéhyde ou l'éthylène-glycol.

6. Membrane semi-perméable suivant les revendications 1-5, caractérisée en ce que la proportion des composés de formule I et/ou de leurs composés hydrosolubles dans le produit de polycondensation s'élève au moins à 20 % en poids.

7. Membrane semi-perméable suivant les revendications 1-6, caractérisée en ce que la proportion des composés de formule I et/ou de leurs composés hydrosolubles dans le mélange initial à condenser s'élève à 20-80 % en poids.

8. Utilisation des membranes composites semi-perméables suivant les revendications 1-7 pour l'osmose inverse et l'ultrafiltration.

9. Utilisation suivant la revendication 8 pour le dessalement de l'eau de mer.